# EUROPEAN PATENT APPLICATION

(11) **EP 2 292 557 A1**
(43) Date of publication of application: **09.03.2011**
(21) Application number: 09011306.9
(22) Date of filing: 03.09.2009
(51) Int. Cl.: C01B 25/45

(54) **Continuous synthesis of carbon-coated lithium-iron-phosphate**

(71) Applicant: Clariant International Ltd., 4132 Muttenz 1 (CH)
(72) Inventor: Metz, Hans Joachim, Dr., 60489 Frankfurt am Main (DE); Waser, Oliver, 6370 Oberdorf (CH); Büchel, Robert, 8044 Zürich (DE); Pratsinis, Sotiris E., 8032 Zürich (CH)
(74) Representative: Hütter, Klaus

(57) **Abstract**

The invention relates to a continuous process for preparing carbon-coated lithium-iron-phosphate particles, wherein the carbon-coated lithium-iron-phosphate particles have a mean (d₅₀) particle size of 10 to 150 nm, and wherein the carbon-coating is an acetylene-black coating, comprising performing in a reactor a flame-spray pyrolysis step (i) in a particle formation zone of the reactor, and a carbon-coating step (ii) in a carbon-coating zone of the reactor, wherein in
(i) a combustible organic solution containing a mixture of lithium or a lithium compound; iron or an iron compound; and phosphorus or a phosphorous compound in an organic solvent, is fed through at least one nozzle where said organic solution is dispersed, ignited and combusted, to give a flame spray thereby forming an aerosol of lithium iron phosphate particles;
(ii) acetylene gas is injected into said aerosol thereby forming an acetylene-black coating on the lithium iron phosphate particles;
(iii) the coated particles are cooled by an inert quench gas and collected on a filter.

## Description

The present invention relates to a novel, continuous synthesis of a particular LiFePO₄/C composite and novel acetylene-black coated lithium-iron-phosphate nanoparticles and their use as cathode material for lithium-ion batteries.

LiFePO₄ is known as a potential cathode material for lithium-ion batteries. It has the advantage of high energy density, high theoretic capacity, high charge/discharge potential, low costs, environmental friendliness, and shows good cycle stability during the charge/discharge process. The main disadvantage of LiFePO₄ materials are poor electronic conductivity limiting its fast charging/discharging, slow lithium ion diffusion and poor batch reproducibility (Yung-Da Cho et al., J. Power Sources, 189 (2009), 256-262).

In order to enhance the electronic conductivity and electrochemical properties of LiFePO₄ cathode materials, carbon coating was suggested by some research groups. In Z.Chen, J. Electrochemical Soc., 149(9), A1184-A1189 (2002) and in R. Dominko et al., J. Electrochemical Soc., 152(3), A607-A610 (2005) sucrose or cellulose derivatives are used as carbon source for coating, while Yung-Da Cho et al. (see above reference) report of polystyrene or malonic acid as carbon source.

It was found, however, that the LiFePO₄/C composite materials reported in the above mentioned references still lack sufficient performance with respect to conductivity while their synthesis is dominated by costly and hard to scale-up sol-gel (Dominko et al., see above) or solid-state (Cho et al. see above) processes. Typically carbon is coated around the particles by a wet process and calcinated at high temperatures. Thereby impurity phases are incorporated in the final product while liquid by-products are generated requiring costly cleaning. The production process is difficult to integrate into a continuous one.

It was the object of the present invention to provide a lithium-iron-phosphate material having improved chemical, physical and electrochemical properties to be used as cathode material in lithium-ion batteries.

It was a further object of the present invention to provide a feasible process for preparing carbon coated lithium-iron-phosphate particles.

It was found surprisingly that a two-stage process comprising a flame-spray-pyrolysis (FSP) step and a particular carbon-coating step as specified hereinafter provides improved lithium-iron-phosphate material useful for lithium-ion batteries.

The present invention provides a continuous process for preparing carbon-coated lithium-iron-phosphate particles, wherein the carbon-coated lithium-iron-phosphate particles have a mean (d₅₀) particle size of 10 to 150 nm, preferably 10 to 100 nm, most preferably 10 to 80 nm, especially about 50 nm, and wherein the carbon-coating is an acetylene-black coating, comprising performing in a reactor a flame-spray pyrolysis step (i) in a particle formation zone of the reactor, and a carbon-coating step (ii) in a carbon-coating zone of the reactor, wherein in
(i) a combustible organic solution containing a mixture of lithium or a lithium compound; iron or an iron compound; and phosphorus or phosphorous compound in an organic solvent, is fed through at least one nozzle where said organic solution is dispersed, ignited and combusted, to give a flame spray thereby forming an aerosol of lithium iron phosphate particles;
(ii) acetylene gas is injected into said aerosol thereby forming an acetylene-black coating on the lithium iron phosphate particles;
(iii) the coated particles are cooled by an inert quench gas and collected on a filter.

In spray flame synthesis, the organic solution containing the desired precursor compounds is pumped through a capillary and dispersed in a nozzle, into fine droplets by a mixture of oxygen and preferably nitrogen. The so formed droplets are ignited by a supporting flamelet of premixed methane and oxygen. The solvents in the droplets combust and thereby release the dissolved precursor ions which then chemically react with oxygen to form amorphous Li-Fe-P-O clusters that grow by coagulation and sintering. Furthermore, it is expedient to introduce a flow of an oxygen containing sheath gas, preferably N₂/O₂, in order to control the oxygen stoichiometry in the particle formation and coating zone. In the particle formation zone gas and particles have a temperature of 20 to 2000 °C, preferably of 700 to 1500 °C.
The particle size can be controlled by the precursor concentration in the solution as well as by the flame conditions (precursor feed rate, dispersion gas flow rate).

At a defined distance above the spray flame acetylene is injected into the reactor and the particles are coated with acetylene black by exothermic decomposition of acetylene on the particle surface. In this carbon coating zone the gas and the particles have a temperature of 500 to 2000 °C, preferably of 1000 to 2000 °C. This hot reactive gas has then to be cooled down to temperatures of 300 to 20 °C by an inert quench gas, e.g. N₂ or Ar, prior to its release to ambient air so that the acetylene black does not burn off. The so produced coated particles are then collected on a filter, e.g. a glass fiber filter, having a temperature of 50 to 250 °C.

Optionally, the collected particles are annealed in an inert environment, e.g. vacuum or inert gas such as N₂ or Ar, preferably for 0.5 to 2 hours, at a temperature between 500 and 800°C, to ensure complete crystallization into olivine crystal form.

A typical set-up for flame spray pyrolysis is disclosed in L. Mädler, H.K. Kammler, R. Müller, S.E. Pratsinis, J. Aerosol Sci., 33, 369 (2002). A typical spray apparatus consists of a gas-assisted nozzle that is made from a capillary tube of outer diameter of about 0.8 to 1 mm and an inner diameter of about 0.5 to 0.7 mm that lies in an opening of about 1 to 1.4 mm in diameter creating an annular gap. Precursor and fuel flow through a capillary tube while the dispersion gas passes through the annular gap. The mass flow rate is determined by the gap, according to the applied atomization pressure which is the difference of the nozzle upstream pressure (1.2 to 8 bar) and downstream pressure (typically atmospheric pressure).

The following lithium compounds, for example, can be used as Li-precursors:
- Elemental lithium
- Bis(trifluoromethane)sulfonimide lithium salt
- Butyllithium
- Cyclopentadienyllithium
- Isobutyllithium
- Lithium 2-ethylhexoxide
- Lithium 3-fluoropyridine-2-carboxylat
- Lithium acetate
- Lithium acetate dehydrate
- Lithium acetoacetate
- Lithium acetylacetonate
- Lithium acetylide ethylenediamine complex
- Lithium amide
- Lithium azide
- Lithium benzoate
- Lithium β-hydroxypyruvate hydrate
- Lithium borohydride
- Lithium bromide
- Lithium bromide hydrate
- Lithium carbamoylphosphate
- Lithium carbonate
- Lithium chloride
- Lithium citrate hydrate
- Lithium diethylamide
- Lithium diisopropylamide
- Lithium ethoxide
- Lithium hexafluorophosphate
- Lithium hydroxide

The following iron compounds, for example, can be used as Fe-precursors:
- Elemental iron
- Ferric chloride
- Ferric citrate
- Iron phosphide
- Iron(II) acetylacetonate
- Iron(II) oxalate dihydrate
- Iron(III) acetylacetonate
- Iron oxide
- Iron nitrate

The following phosphorous compounds, for example, can be used as P-precursors:
- Tributylphosphate
- elemental Phosphorus
- Phosphorus oxychloride
- Phosphorus pentoxide
- Phosphorous acid
- Diphenyl phosphate
- Trimethyl phosphate

The precursors are dissolved in combustible liquids, such as mineral spirits, toluene, other liquid hydrocarbons, alcohols, carbonyl compounds, such as fatty acids, C₆-C₁₂ carboxylic acids, esters, alkyl ethers, dialkyl glycol ethers, preferably in a concentration of from 0.1 to 1 mol/l, especially from 0.2 to 0.6 mol/l.

The liquid precursor mixture feed rate in the above described flame spray pyrolysis device is preferably between 1 to 10 ml/min, especially between 2 to 8 ml/min.

As fuel, C₁-C₈-alkanes, such as methane, ethane, propane, butane or iso-octane, or C₁-C₄-alkanols, such as methanol, ethanol, propanol, 2-butanol, can be used.

As oxidant air or pure oxygen can be used, that serves also as droplet dispersion gases. The dispersion gas flow rate is preferably between 0.1 to 20 l/min, especially between 1 to 10 l/min.

Evaporation and ignition of the spray can be initiated by a smaller flame ring emerging from an annular gap. Most preferably a premixed methane/oxygen gas flows through that ring at a total flow rate of 2 to 8 l/min.

Furthermore a sheath gas flow of a variable mixture of N₂ and O₂ is introduced whereas a total sheath gas flow, e.g. a flow between 10 and 30 l/min, is kept constant, but the ratio between O₂ and N₂ is used to control the oxygen stoichiometry in the combustion zone.

Acetylene is introduced into the tube reactor through several radial openings which lead to a torus pipe-ring. The acetylene flow rate is preferably between 0.1 to 5 l/min. The preferred amount of acetylene to be deposited on the lithium-iron-phosphate particles is 0.01 to 0.1 mol, more preferably 0.03 to 0.05 mol, acetylene per m² of BET-particle surface.

The carbon-coating thickness can be controlled by variation of the acetylene flux rate and the residence time in the carbon-coating zone. The preferred acetylene black coating thickness is 1 to 10 nm, preferably 1 to 5 nm, especially 1 to 2 nm.

According to IUPAC definition, acetylene black is a special type of carbon black formed by an exothermic decomposition of acetylene. It is characterized by the highest degree of aggregation and crystalline orientation when compared with all other types of carbon black. Therefore, the structure of an acetylene black coating is different from a carbon black coating from other carbon sources, such as sugars, cellulose, organic acids. It is also different from graphite.

Therefore, the present invention also provides for nanostructured, acetylene black coated lithium iron phosphate particles. Nanostructured shall mean an average(d₅₀) particle size of 10 to 150 nm, preferably 10 to 100 nm, more preferably 10 to 80 nm, most preferably about 50 nm, whereby the preferred acetylene black coating thickness is 1 to 10 nm, preferably 1 to 5 nm, especially 1 to 2 nm.

Lithium iron phosphate preferably means compounds of the formula Li₍₁₋ₓ₎FePO₄, wherein x is a number of -0.3 to 0.3 . If x is zero, all Fe is Fe(II). If x is different from zero, a portion of the Fe could be Fe(III). If x is a number below zero, part of the Li ions are outside the olivine crystal.

A further subject of the present invention are nanostructured, acetylene black coated lithium iron phosphate particles prepared according to the above described process. A further subject of the present invention is the use of said nanostructured, acetylene black coated lithium iron phosphate particles for manufacturing a cathode material. In a preferred embodiment the cathode material is used in a Li-ion battery.

### Examples

The following reactor set-up was used:
Quartz glass tube, total length about 650 mm, diameter about 47 mm;
Distance between FSP nozzle and acetylene injection: about 450 mm:
Length of carbon coating zone: about 200 mm;
Length of cooling zone: about 40 mm; Distance between FSP nozzle and particle filter: about 1000 mm.

### Example 1:

A precursor mixture is prepared as follows:
Metal-organic Fe (Fe(III)-acetylacetonate), P (Tributylphosphate) and Li (Li-acetylacetonate) were completely dissolved in liquid organic solvents of ethanol (98 %), 2-ethylhexanoic acid (99 %), toluene and diethylene glycol monobutyl ether in a mixing ratio of 1:1:1:1 such that the total metal and P concentration in the liquid was 0.25 mol/L solvent.

This liquid was then pumped with 3ml/min through a capillary (Hamilton, Gauge 32) and dispersed into fine droplets with 3 L/min oxygen. The so formed droplets were ignited by a supporting flamelet of premixed 1 L/min CH₄ (99.5 %) and 2 Umin O₂ (99.95 %). The solvents in the droplets combusted and thereby released the dissolved metal ions which then chemically reacted with oxygen to form amorphous Li-Fe-P-O clusters that grow by coagulation and sintering. Furthermore a sheath gas flow of a variable mixture between N₂ (99.995 %) and O₂ (99.95 %) was introduced whereas a total sheath gas flow of 20 Umin was kept constant, but the ratio between O₂ and N₂ was used to control the oxygen stoichiometry in the combustion zone. For example: 17 L/min N₂ and 3 L/min O₂.

This reactor was enclosed into a quartz glass tube (47 mm inner diameter) in order to control the oxygen stoichiometry during the particle formation process. At 450 mm height above the burner acetylene was injected into the reactor (Acetylene gas flow: about 1 l/min, temperature 20 °C) and the particles were coated with acetylene black. The hot reactive gas (700 °C to 900 °C) was cooled down below 300 °C by a quench gas (Quench gas flow: N₂ 20 l/min, temperature 20 °C) prior to its release to ambient air so that the acetylene black did not burn off. The product particles were collected on a glass fiber filter (Whatmann GF/D, 25.7 cm in diameter) with the aid of a vacuum pump. The temperature on the filter was adjusted to be below 250 °C.

Then, the particles were annealed in 200 ml/min flowing N₂ gas in a TGA unit (Mettler Toledo) while heated at 10 °C/min from 40 to 800 °C and kept isothermal at 800 °C for 1 hour before cooling down to room temperature at 5 °C/min.

Particle characterization:
The particles were characterized by Nitrogen adsorption (Micromeretics Tristar) and
X-Ray diffraction (Bruker AXS D8 Advance), TGA (Mettler Toledo TGA/SDTA851^{®}) as well as Raman spectroscopy (Renishaw InVia).

Results:
BET surface area: 73 m²/g LiFePO₄ crystal size: 78 nm Weight % acetylene black (TGA): 15 % Raman spectrum: G-band 1598 cm⁻¹ (29 %), D1-band 1353 cm⁻¹ (71 %).

4-point electrical conductivity was measured (HP Digital Multimeter) on a pellet (13 mm diameter) of pressed (4000 kg/cm²) powder (100 mg) with a thickness of 0.6 mm. Result: 3.5 x 10⁻³ Scm⁻¹

The particles were prepared and electrochemically analyzed in analogy to the method used in Patey et al. J. Power Sources (2009) 189, 149-154**.**

Discharge capacity at 1C was measured by galvanostatic cycling.
Result: 150 mAh/g Comparative Example 1: carbon free LiFePO₄:
Carbon free LiFeP04 particles prepared as described in Chung et al, Nature Mater. (2002) 1, 123-128 showed a primary particle crystal size of 50 to 200 nm. 4-point electrical conductivity measurement at room temperature on a pellet, prepared similarly to the one described above resulted in 10⁻⁹ Scm⁻¹.

This indicates that the conductivity of the acetylene-black coated LiFePO₄ increased by more than 6 orders of magnitude (10⁶ times higher) and therefore a battery comprised of such acetylene-back coated material could be charged and discharged in the order of 100 times faster than a battery with carbon free crystalline LiFePO₄.

Comparative Example 2: LiFePO₄/C composite with polystyrene as C source:
LiFePO₄/C composite using polystyrene as carbon source, prepared according to Yung-Da Cho et al., J. Power Sources 189 (2009) 256-262 resulted in particles of about 90 nm in diameter (TEM) with approximately 2.5 weight % CB content. 4-point electrical conductivity measurements, performed on a pellet as described before resulted in 7 x 10⁻⁴ Scm⁻¹.

Discharge capacity at 0.2C was measured by galvanostatic cycling
Result: 141 mAh/g

Comparative Example 3: LiFePO₄/C composite with cellulose as C source:
LiFePO₄/C composite using hydroxyethyl cellulose as carbon source prepared according to Dominko et al., J. Electrochem. Soc. 152(3) A607-A610 (2005) resulted in particles of approximately 100 nm diameter (TEM) and 3.2 up to 12.3 weight % CB content.

Discharge capacity at 1C was measured by galvanostatic cycling
Result: 125 mAh/g

## Claims

1. A continuous process for preparing carbon-coated lithium-iron-phosphate particles, wherein the carbon-coated lithium-iron-phosphate particles have a mean (d₅₀) particle size of 10 to 150 nm, and wherein the carbon-coating is an acetylene-black coating, comprising performing in a reactor a flame-spray pyrolysis step (i) in a particle formation zone of the reactor, and a carbon-coating step (ii) in a carbon-coating zone of the reactor, wherein in
(i) a combustible organic solution containing a mixture of lithium or a lithium compound; iron or an iron compound; and phosphorus or a phosphorous compound in an organic solvent, is fed through at least one nozzle where said organic solution is dispersed, ignited and combusted, to give a flame spray thereby forming an aerosol of lithium iron phosphate particles;
(ii) acetylene gas is injected into said aerosol thereby forming an acetylene-black coating on the lithium iron phosphate particles;
(iii) the coated particles are cooled by an inert quench gas and collected on a filter.

2. The process as claimed in claim 1, wherein an oxygen containing sheath gas is introduced for controlling the oxygen stoichiometry in the particle formation zone.

3. The process as claimed in claim 1 or 2, wherein the gas and the particles in the particle formation zone have a temperature of 700 to 1500°C.

4. The process as claimed in any of claims 1 to 3, wherein the gas and the particles in the carbon coating zone have a temperature of 1000 to 2000°C.

5. The process as claimed in any of claims 1 to 4, wherein the coated particles are cooled by the inert quench gas to a temperature of 300 to 20°C.

6. The process as claimed in any of claims 1 to 5, wherein the filter has a temperature of 50 to 250°C.

7. The process as claimed in any of claims 1 to 6, wherein the collected particles are annealed in an inert environment at a temperature between 500 and 800°C.

8. Nanostructured, acetylene black coated lithium iron phosphate particles.

9. Particles as claimed in claim 8, having an average particle size of 10 to 150 nm.

10. Particles as claimed in claim 8, having a average particle size of 10 to 80 nm.

11. Particles as claimed in any of claims 8 to 10, wherein the acetylene black coating thickness is 1 to 10 nm.

12. Particles as claimed in any of claims 8 to 10, wherein the acetylene black coating thickness is 1 to 2 nm.

13. Particles as claimed in any of claims 8 to 12, obtainable by a process of claim 1.

14. Use of particles as claimed in any of claims 8 to 13 for manufacturing a cathode material.

15. The use as claimed in claim 14, wherein the cathode material is part of a Li-ion battery.

## Amended claims

### Amended claims in accordance with Rule 137(2) EPC.

**1.** A continuous process for preparing carbon-coated lithium-iron-phosphate particles, wherein the carbon-coated lithium-iron-phosphate particles have a mean (d₅₀) particle size of 10 to 150 nm, and wherein the carbon-coating is an acetylene-black coating, comprising performing in a reactor a flame-spray pyrolysis step (i) in a particle formation zone of the reactor, and a carbon-coating step (ii) in a carbon-coating zone of the reactor, wherein in
(i) a combustible organic solution containing a mixture of lithium or a lithium compound; iron or an iron compound; and phosphorus or a phosphorous compound in an organic solvent, is fed through at least one nozzle where said organic solution is dispersed, ignited and combusted, to give a flame spray thereby forming an aerosol of lithium iron phosphate particles;
(ii) acetylene gas is injected into said aerosol thereby forming an acetylene-black coating on the lithium iron phosphate particles;
(iii) the coated particles are cooled by an inert quench gas and collected on a filter, and
, wherein an oxygen containing sheath gas is introduced for controlling the oxygen stoichiometry in the particle formation zone ; and
, wherein the gas and the particles in the particle formation zone have a temperature of 700 to 1500°C ; and
wherein the gas and the particles in the carbon coating zone have a temperature of 1000 to 2000°C ; and wherein the collected particles are annealed in an inert environment at a temperature between 500 and 800°C.

**2.** The process as claimed in claim 1, wherein the coated particles are cooled by the inert quench gas to a temperature of 300 to 20°C.

**3.** The process as claimed in any of claims 1 to 2, wherein the filter has a temperature of 50 to 250°C.

**4.** Nanostructured, acetylene black coated lithium iron phosphate particles, wherein the acetylene black coating thickness is 1 to 2 nm.

**5.** Nanostructured, acetylene black coated lithium iron phosphate particles as claimed in claim 4, having an average particle size of 10 to 80 nm.

**6.** Nanostructured, acetylene black coated lithium iron phosphate particles, obtainable by a process of claim 1.

**7.** Particles as claimed in claim 6, having an average particle size of 10 to 150 nm.

**8.** Particles as claimed in claims 6 or 7, wherein the acetylene black coating thickness is 1 to 10 nm.

**9.** Use of particles as claimed in any of claims 4 to 8 for manufacturing a cathode material.

**10.** The use as claimed in claim 9, wherein the cathode material is part of a Li-ion battery.
